# EUROPÄISCHE PATENTSCHRIFT

(11) **EP 1 406 048 B1**
(45) Veröffentlichungstag und Bekanntmachung des Hinweises auf die Patenterteilung: **03.03.2010**
(21) Anmeldenummer: 03021795.4
(22) Anmeldetag: 26.09.2003
(51) Int. Cl.: B01D 46/44, F24F 3/16

(54) **Überwachungseinrichtung für die Raumluftverunreinigung**
Monitoring device for the room air pollution
Dispositif de surveillance de la pollution de l'air de locaux

(30) Priorität: 01.10.2002 DE 10245689
(43) Veröffentlichungstag der Anmeldung: 07.04.2004
(73) Patentinhaber: DEERE & COMPANY, Moline, Illinois 61265-8098 (US)
(72) Erfinder: Dietrich, Gunnar, 68199 Mannheim (DE)
(74) Vertreter: Magin, Ludwig Bernhard

(56) Entgegenhaltungen:
- DE-A- 10 036 270
- DE-A- 10 058 086
- DE-A- 10 060 669
- DE-U- 9 312 523

## Beschreibung

Die Erfindung betrifft eine Vorrichtung zur Überwachung des Verunreinigungsgrades der Luft in einem geschlossenen Raum, insbesondere einer Fahrzeugkabine. Die Vorrichtung enthält wenigstens ein Gebläse, welches Luft, die durch wenigstens ein Filterelement strömt, in den geschlossenen Raum fördert. Wenigstens ein Sensor erfasst den Verunreinigungsgrad der Innenraumluft und ist mit einer Steuervorrichtung verbunden.

Bei Traktorkabinen, die für die Ausbringung von Spritzmitteln nach ASAE S525 zertifiziert sind, wird bei einer Partikelgröße von 3µm ein Partikelreduktionsverhältnis von der Umgebung zum Kabineninneren von 50:1 gefordert. Trotz einer entsprechenden Auslegung des Frisch- und Umluftsystems ist die dauerhafte Einhaltung dieses Reduktionsverhältnisses nicht immer gewährleistet. Probleme können beispielsweise auftreten, wenn durch unsachgemäße Wartung die maximal zulässige Standzeit der Filter überschritten wird, wenn Schäden an der Kabine unentdeckt bleiben, wenn Alterungserscheinungen an den Kabinendichtungen auftreten oder wenn durch unsachgemäße Reparaturarbeiten die Kabinendichtigkeit nicht mehr den Anforderungen entspricht. Insbesondere beim Ausbringen die Gesundheit gefährdender und/oder toxischer Partikel muss die Einhaltung einer vorgegebenen Höchstbelastung innerhalb des Raumes, insbesondere im Kabineninneren, gewährleistet sein.

Die DE-U-93 12 523 beschreibt eine Vorrichtung für eine Standzeit-Überwachung von Filtereinrichtungen in raumlufttechnischen Anlagen, bei der die Raumluft mittels eines Gebläses durch einen Kanal, in dem ein Filter angeordnet ist, gefördert wird. Beiderseits des Filters ist je ein Sensor zur Konzentrationsmessung angeordnet. Es ist eine Eingabevorrichtung mit einem Tank für ein Prüfmedium, eine Pumpe und eine im Zuströmbereich vor dem Filter angeordnete Einlassdüse vorgesehen. Durch die Einlassdüse wird in definierten Zeitabständen automatisch ein Prüfmedium zugeführt. Eine Steuervorrichtung überwacht die Signale der beiden Sensoren und aktiviert ein optisches und/oder akustisches Signale, sofern sich die Konzentrationswerte vor und hinter dem Filter annähern, was auf ein Nachlassen der Filterkapazität zurückgeführt wird. Diese Vorrichtung erfordert zwei Sensoren und eine relativ aufwendige Eingabeeinrichtung für ein Prüfmedium. Sie ist daher für eine Reihe von Anwendungsfällen unwirtschaftlich und ungeeignet.

Die der Erfindung zugrunde liegende Aufgabe wird darin gesehen, eine Vorrichtung zur Überwachung des Verunreinigungsgrades der Luft in einem geschlossenen Raum der eingangs genannten Art anzugeben, durch welche die vorgenannten Probleme überwunden und die Anforderungen erfüllt werden. Insbesondere soll die Vorrichtung auch für die Überwachung gesundheitsschädlicher oder toxischer Partikel geeignet sein. Sie soll eine zuverlässige Erkennung von Dichtigkeitsmängeln ermöglichen und Personen vor schädlichen Luftverschmutzungen schützen. Sie soll darüber hinaus eine Bewertung des Filtersystems nach der tatsächlichen Belastung ermöglichen, so dass ein Filterwechsel aufgrund des Verschmutzungsgrades erfolgt und nicht lediglich nach Ablauf fester Wartungsintervalle.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die eingangs genannte Überwachungsvorrichtung enthält eine Steuervorrichtung, welche erfindungsgemäß einen Speicher aufweist, in dem wenigstens ein Kennfeld für eine vorgebbare zeitliche Abnahme des Verunreinigungsgrades abgelegt ist. Dieses Kennfeld entspricht einem ordnungsgemäßen Betrieb des Raum- und Filtersystems, bei dem die Partikelkonzentration aufgrund der Filterwirkung in einem bestimmten zeitlichen Verlauf abnimmt. Das Kennfeld enthält beispielsweise eine Funktion, die einen zeitlichen Verlauf des Verunreinigungsgrades, beispielsweise einer Partikelkonzentration oder eine Partikelanzahl, wiedergibt. Das Kennfeld kann beispielsweise durch Versuche an dem geschlossenen Raum, insbesondere an der Fahrzeugkabine ermittelt werden, in dem bei einem Probebetrieb in einer Umgebung mit bekannter gleichbleibender Verunreinigung die zeitliche Abnahme der Verunreinigung innerhalb des Raumes erfasst wird. Es ist auch möglich, eine theoretische zeitliche Abnahme insbesondere aus dem Raumvolumen, der Fördermenge des Gebläses und der Filtereigenschaften zu berechnen und dann vorzugeben.

Des Weiteren enthält die erfindungsgemäße Steuervorrichtung Mittel, welche in vorgebbaren Zeitintervallen den tatsächlichen Verunreinigungsgrad laufend erfassen und diesen mit den zeitlich zugeordneten Werten des Kennfeldes vergleichen. Treten Abweichungen zwischen dem Kennfeld und der gemessenen zeitlichen Abnahme der Verunreinigung auf, so deutet dies auf Störungen hin. Diese sind beispielsweise darauf zurückzuführen, dass die Filterwirkung des Filterelements nicht mehr ausreicht, dass der Lüftungskreis nicht voll funktionsfähig ist oder dass in den geschlossenen Raum von außen mehr Verunreinigung eintritt, z. B. durch mangelhafte Abdichtung oder offenstehende Türen oder Fenster, als es aufgrund der verwendeten Anordnung zu erwarten ist.

Stellt sich der gewünschte Abfall der Konzentration nicht ein, so gibt die Steuervorrichtung Warnsignale aus, welche die Aufmerksamkeit von Personen erregen. Dies kann durch das Aufleuchten einer Warnlampe oder das Auslösen eines akustischen Signals erfolgen. Durch die Warnsignale können auch Sicherheitsmaßnahmen eingeleitet werden. Handelt es sich beispielsweise um ein Fahrzeug, mit dem Pflanzenschutzspritzmittel ausgebracht werden, kann ein automatisches Einstellen der Sprayaktivität erfolgen.

Gemäß einer bevorzugten Ausgestaltung der Erfindung ist der Innenraumsensor ein Partikelsensor oder ein Partikelzähler. Als Sensor zur Erfassung des Verunreinigungsgrades kann beispielsweise ein Partikelzähler verwendet werden, der nach dem bekannt Prinzip arbeitet, welches bei den Messzellen des Typs 227B, die durch die Fa. MetOne in Deutschland vertrieben werden, verwendet wird. Diese Messzelle ist geeignet, Partikel bis herab zu einer Größenordnung von 0,3 µm bzw. von 3µm zu erfassen.

Für einen landwirtschaftlichen Einsatz eines Schleppers mit einer Feldspritze oder eines selbstfahrenden Pflanzenschutzgeräts wird vorzugsweise ein Innenraumsensor in der Fahrzeugkabine angebracht, der auf gesundheitsgefährdende oder toxische Partikel, beispielsweise auf feinzerstäubtes Pflanzenschutzmittel anspricht. Wird nach der Inbetriebnahme des Fahrzeugs durch die erfindungsgemäße Überwachungsvorrichtung festgestellt, dass die Partikelkonzentration in der Fahrzeugkabine nicht so schnell abnimmt wie ein vorgegebener Verlauf, so wird die Feldspritze bzw. das Pflanzenschutzgerät abgestellt, um die Bedienungsperson zu schützen und dieser Gelegenheit zu geben die Ursache für die Störung aufzufinden.

Es wird vorzugsweise ein Innenraumsensor ausgewählt, der in der Lage ist, Partikelgrößen bis herab zu einem Querschnitt zu erfassen, der in der Größenordnung 0,3 bis 3 µm liegt.

Die erfindungsgemäße Überwachungsvorrichtung lässt sich vorteilhaft in einem Umluftsystem verwenden, bei dem die Raumluft durch einen Lüfter in einem Umluftkreis, der wenigstens ein Umluftfilterelement enthält, geführt wird. Es ist auch von Vorteil die erfindungsgemäße Überwachungsvorrichtung in Verbindung mit einem Frischluftkreis zu verwenden, bei dem die Frischluft durch ein Gebläse über einen Frischluftkanal, in dem wenigstens ein Frischluftfilterelement angeordnet ist, angesaugt und in den geschlossenen Innenraum geblasen wird. Dabei wird im Innenraum ein Überdruck erzeugt, der sich über Undichtigkeiten teilweise abbaut. Von besonderem Vorteil ist es eine Kombination aus Umluftkreis und Frischluftkreis zu verwenden, weil durch den Frischluftkreis ständig Frischluft zugeführt und ein leichter Überdruck aufgebaut wird und durch den Umluftkreis die Filterwirkung verstärkt und die Klimatisierung des Raums erleichtert wird.

Gemäß einer bevorzugten Ausgestaltung der Erfindung wird durch das Gebläse, das (auch) als Frischluftgebläse dient, im geschlossenen Innenraum ein leichter Überdruck gegenüber der Umgebung aufgebaut, der vorzugsweise zwischen 50 und 200 Pa liegt.

Das Filterelement (Umluftfilterelement und/oder Frischluftfilterelement) enthält im allgemeinen ein Filtervlies, welches Partikel wie Staub und toxische Partikel zurückhält. Es ist von besonderem Vorteil, wenn das Filterelement auch Aktivkohle enthält, durch die gasförmige Substanzen, insbesondere Gerüche gefiltert werden.

Vorzugsweise wird der Innendruck durch einen im Raum angeordneten Drucksensor überwacht. Bei dem Drucksensor kann es sich um eine Druckdose mit einer ablesbaren Anzeige handeln. Der Innendruck wird als elektrisches Signal ausgegeben, durch die Steuervorrichtung erfasst und mit einem vorgebbaren gewünschten Innendruck verglichen. Die Gebläsedrehzahl wird durch die Steuervorrichtung vorzugsweise stufenlos so geregelt, dass sich der gewünschte Innendruck einstellt. Je größer der Verschmutzungsgrad des Filterelements ist, desto mehr sinkt der Innendruck ab, so dass die Gebläsedrehzahl entsprechend nachgeregelt werden muss. Wird dabei die Höchstdrehzahl des Gebläses erreicht oder überschritten, so wird ein Warnsignal ausgegeben und in das System eingegriffen, indem beispielsweise eine Feldspritze abgestellt wird.

Eine vorteilhafte Weiterbildung der Erfindung sieht vor, dass das Umluftfilterelement und/oder das Frischluftfilterelement je wenigstens ein Kodierelement aufweisen, welches eine Identifizierung des Filterelements erlaubt. Im Bereich der Filteraufnahme ist eine Erkennungseinrichtung zur Erkennung der Kodierung angeordnet ist. Durch die Filterkodierung lässt sich das Filterelement identifizieren. Die Kodierung beinhaltet beispielsweise den Filtertyp und die Seriennummer des Filterelements. Die Kodierung kann beispielsweise mittels eines dem bekannten EC-Kartenchips ähnlichen Chips, eines Bar Codes oder durch eine mechanische Kodierung erfolgen. Die Informationsübertragung zwischen dem Kodierelement und der Erkennungseinrichtung erfolgt vorzugsweise berührungslos, so dass die Bauteile gekapselt, beispielsweise in Kunststoff eingegossen sein können und somit vor Verschmutzung und Korrosion geschützt sind. Anhand der Kodierung erkennt die Überwachungsvorrichtung den Filtertyp und kann automatisch die zugehörige Kennlinie des gespeicherten Kennfeldes für den Vergleich mit dem gemessenen Verunreinigungsgrad heranziehen.

Es ist von besonderem Vorteil, die Filteridentifizierung mit einem Filterbetriebstundenzähler zu koppeln. Sobald ein Filterelement installiert und das Luftfiltersystem aktiviert ist, erkennt die Steuervorrichtung diesen Zustand und der Filterbetriebsstundenzähler startet. Die Aktivierung kann bei einem Fahrzeug beispielsweise durch das Starten mittels Zündschlüssel erfolgen. Der Betriebsstundenzähler erfasst alle Aktivierungsphasen des Luftfiltersystem, kumuliert diese und speichert die kumulierten Werte. Die Steuervorrichtung ordnet jedem Filterelement die zugehörigen kumulierten Betriebstunden zu. Wenn eine vorgebbare maximale Betriebstundenzahl für ein Filterelement erreicht ist, wird dieses Filterelement für die weitere Benutzung unbrauchbar und es wird ein Warnsignal ausgegeben und gegebenenfalls in das System eingegriffen, in dem z. B. eine Feldspritze abgestellt wird.

Durch die erfindungsgemäße Überwachungsvorrichtung lässt sich das System der Raumabdichtung und der Luftfilterung kontinuierlich und zuverlässig auf seine Funktionsfähigkeit hin überprüft. Insbesondere werden Dichtigkeitsmängel des geschlossenen Raums frühzeitig erkannt. Auch erfolgt eine Warnung, wenn es die Bedienungsperson versäumt hat, Fenster und/oder Türen des Raumes zu schließen. Das System spricht an, wenn durch unsachgemäße Wartung die maximal zulässige Standzeit der Filter überschritten wird und die Filterwirkung nachlässt. Damit ist ein maximaler Personenschutz insbesondere vor hochtoxischen Partikeln ständig gewährleistet. Filterelemente können zur angemessenen Zeit gewechselt werden, nämlich dann wenn ihr Kontaminationsgrad dies erforderlich macht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung eines geschlossenen Raumes mit erfindungsgemäßer Überwachungseinrichtung,
- Fig. 2: ein Flussdiagramm anhand dessen die Funktionsweise der erfindungsgemäßen Überwachungseinrichtung beschrieben wird und
- Fig. 3: das Diagramm einer zeitlichen Abnahme des Verunreinigungsgrades.

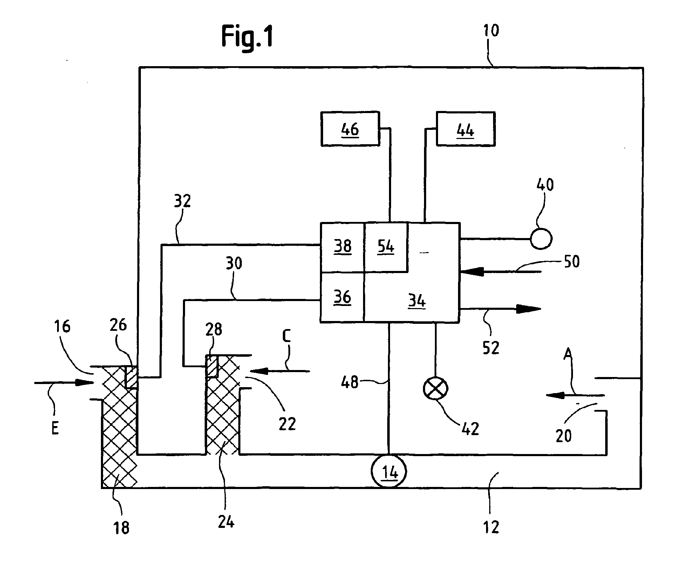

In Fig. 1 ist eine Fahrzeugkabine 10 durch eine umlaufende Linie angedeutet. Es handelt sich hier um die Kabine 10 eines nicht näher dargestellten Ackerschleppers, an den eine Feldspritze zum Austrag eines flüssigen, fein zerstäubten Pflanzenschutzmittels gekoppelt ist. Innerhalb der Kabine 10 verläuft ein Luftkanal 12, in dem ein Gebläse 14 angeordnet ist. Das Gebläse 14 saugt über einen Frischlufteinlass 16 und ein Frischluftfilterelement 18 Umgebungsluft E an. Die Umgebungsluft E kann u. a. mit Staubpartikeln, gesundheitsgefährdenden oder toxischen Teilchen und Geruchsstoffen beladen sein, die durch das Frischluftfilterelement 18 mehr oder weniger vollständig herausgefiltert werden. Die gereinigte Luft A tritt über einen Luftauslass 20 in das Kabineninnere. In der Kabine 10 wird durch das Gebläse 14 ein leichter Luftüberdruck aufgebaut, der die Luft über Undichtigkeiten der Kabine oder gezielt vorgesehene Öffnungen nach Außen drängt. Damit entsteht ein Frischluftkreis.

Gleichzeitig saugt das Gebläse 14 über einen Umlufteintritt 22 und ein Umluftfilterelement 24 Kabinenluft C aus dem Kabineninneren an und führt diese über den Luftauslass 20 zurück in das Kabineninnere. Das Umluftfilter 24 dient der weiteren Reinigung der Kabinenluft. Der Umlufteintritt 22, das Umluftfilterelement 24, der Luftkanal 12, das Gebläse 14 und der Luftauslass 20 bilden einen Umluftkreis.

Sowohl das Frischluftfilterelement 18 als auch das Umluftfilterelement 24 enthalten ein übliches Filtervlies, welches Partikel wie Staub und toxische Partikel zurückhält. Darüber hinaus enthalten die Filterelemente auch Aktivkohle zur Filterung von Gerüchen.

Jedes Filterelement 18, 24 enthält ein Kodierelement 26, 28, dem ein in der Kabine 10 installiertes, nicht näher dargestelltes Lesegerät zugeordnet ist. Die Lesegeräte stehen über Leitungen 30, 32 mit einer elektronischen Steuervorrichtung 34 in Verbindung. Die Steuervorrichtung 34 enthält eine Erkennungseinrichtung 36, welche die Signale der Lesegerät auswertet und das eingebaute Filterelement 18, 24 hinsichtlich seines Typs und seiner Seriennummer identifiziert. Die Steuervorrichtung 34 enthält des Weiteren einen Filterbetriebsstundenzähler 38, der bei Inbetriebnahme des Fahrzeugs durch Betätigung des Zündschlosses 40 startet und beim Stillsetzen des Fahrzeugs das Zählen unterbricht. Die Erkennungseinrichtung ist derart mit dem Betriebsstundenzähler gekoppelt, dass für jedes erkannte Filterelement 18, 24 ein akkumulierter Zählerstand gebildet wird. Der Zählerstand wird mit einer maximalen Betriebsdauer des jeweiligen durch die Kodierung gekennzeichneten Filtertyps verglichen. Bei Erreichen der maximalen Betriebsdauer wird ein Warnsignal über eine Warnlampe 42 ausgegeben, um die Bedienungsperson auf einen erforderlichen Filterwechsel aufmerksam zu machen.

In der Kabine 10 sind ein Drucksensor 44 zur Messung des Innendrucks in der Kabine 10 sowie ein Partikelsensor 46 angeordnet, der feste und flüssige Partikel misst und damit auch auf Flüssigkeitspartikel eines Flüssigkeitsnebels, insbesondere auf gesundheitsbedenkliche oder toxische Partikel wie Pflanzenschutzspritzmittel anspricht. Die Signale des Drucksensors 44 und des Partikelsensors 46 werden durch die Steuervorrichtung 34 verarbeitet. Die Steuervorrichtung 34 steht über eine Leitung 48 mit dem Gebläse 14 in Verbindung und empfängt Signale 50 über den Betriebszustand der Feldspritze.

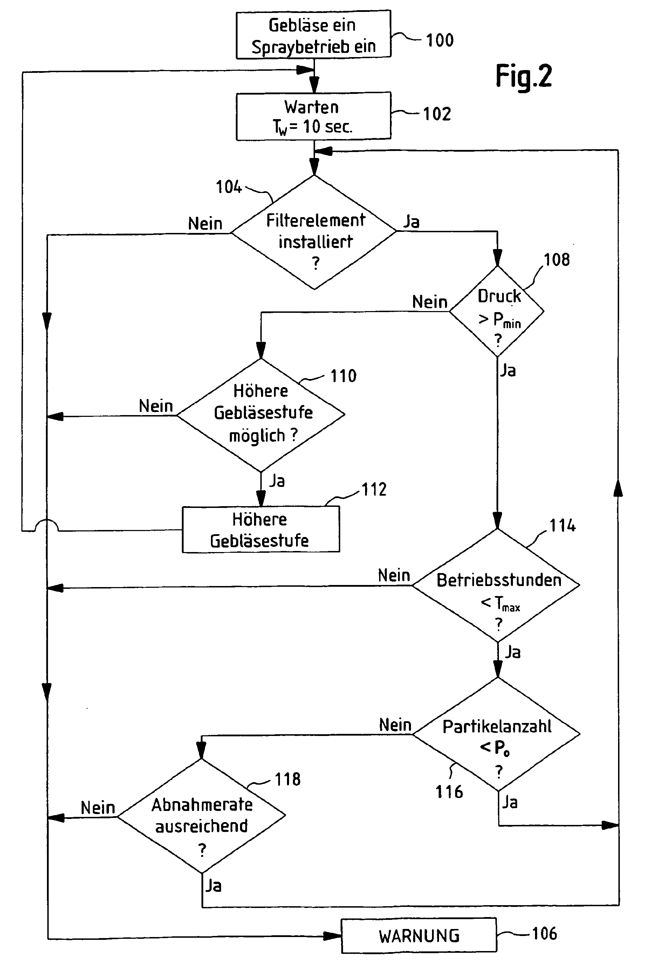

Die Betriebsweise der Steuervorrichtung 34 wird anhand des in Fig. 2 dargestellten Flussdiagramms erläutert. Zunächst prüft die Steuervorrichtung 34 in Schritt 100, ob das Gebläse 14 und die Feldspritze in Betrieb sind. Im Schritt 102 wird dann eine Wartezeit von T_{w} = 10 sec eingehalten, in welcher sich der erforderliche Kabinenüberdruck aufbauen kann. Schritt 104 prüft anhand der Filterkodierungen, ob und welche für den Spritzbetrieb geeigneten Filterelemente 18, 24 installiert sind. Sind keine geeigneten Filterelemente 18, 24 installiert, wird durch Schritt 106 ein Warnsignal ausgelöst. Das Warnsignal löst eine optische (Warnlampe 42) und akustische Warnung aus und stellt über die Steuerleitung 52 die Feldspritze ab, so dass der Spritzmittelaustrag unterbrochen wird.

Sind geeignete Filterelemente 18, 24 installiert, so prüft der Algorithmus in Schritt 108, ob der Kabineninnendruck einen vorgegebenen Mindestwert Pₘᵢₙ übersteigt. Ist dies nicht der Fall, so wird in Schritt 110 geprüft, ob sich die Gebläseleistung steigern lässt. Ist dies nicht möglich, wird mit Schritt 106 ein Warnsignal ausgelöst. Andernfalls wird in Schritt 112 die Gebläseleistung erhöht und der Algorithmus auf Schritt 102 zurückgeführt.

Wird in Schritt 108 ein ausreichender Kabineninnendruck festgestellt, so erfolgt anschließend in Schritt 114 eine Überprüfung der Filterbetriebszeiten. Wird anhand des Betriebsstundenzählers 38 festgestellt, dass die zulässige Betriebsdauer eines Filterelementes 18, 24 erreicht oder überschritten ist, wird durch Schritt 106 ein Warnsignal ausgelöst. Wird die zulässige Betriebsdauer nicht überschritten, so prüft Schritt 116, ob eine vorgebbare zulässige Partikelkonzentration P₀ innerhalb der Kabine eingehalten wird und führt bei positivem Ergebnis den Algorithmus auf Schritt 104 zurück.

Wird die zulässige Partikelkonzentration P₀ nicht eingehalten, so wird in Schritt 118 bestimmt, ob die zeitliche Abnahme der Partikelkonzentration innerhalb der Grenzen eines vorgegebenen Verlaufs liegt. Nimmt die Partikelkonzentration ausreichend schnell ab, so kehrt der Algorithmus zu Schritt 104 zurück, andernfalls wird durch Schritt 106 eine Warnung ausgelöst.

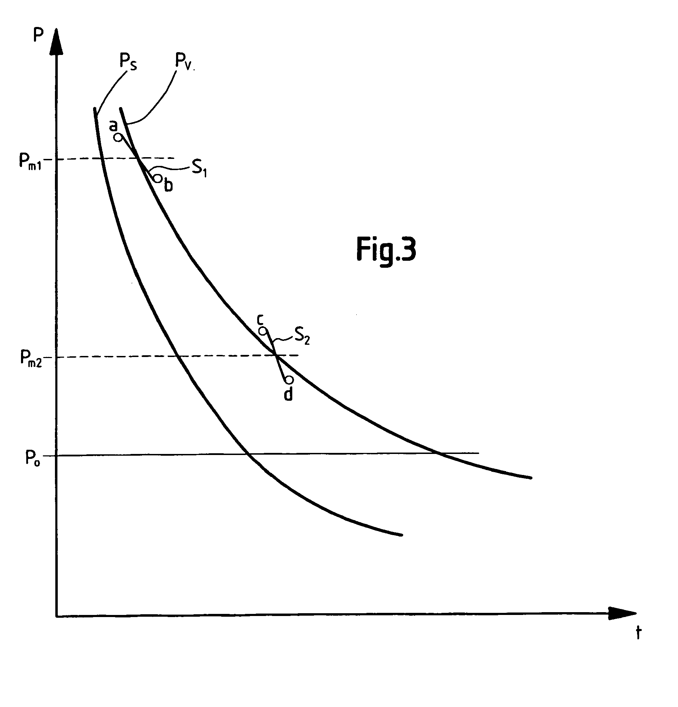

Der Prüfschritt 118 wird anhand des in Fig. 3 dargestellten Diagramms erläutert, die einen zeitlichen Verlauf der innerhalb der Kabine 10 herrschenden Partikelkonzentration P dargestellt. Ein Maß für die Partikelkonzentration ist die Zählrate des Partikelsensors 46. Bei fehlerfreiem Betrieb und einer gegebenen Partikelkonzentration in der Umgebung der Kabine nimmt nach der Inbetriebnahme des Gebläses 14 die Partikelkonzentration innerhalb der Kabine 10 gemäß eines bestimmten Standardverlaufs stetig ab. Dieser Standardverlauf lässt sich durch einen Testaufbau ermitteln oder aufgrund der vorhandenen Konfiguration näherungsweise berechnen und ist in Fig. 3 als Kurve Pₛ dargestellt. Wie erkennbar ist, fällt die Partikelkonzentration P zunächst rasch und dann immer weniger rasch ab, d. h. die Kurve Pₛ wird mit der Zeit immer flacher. Die Kurve Pₛ ist in einem Kennfeldspeicher 54 der Steuervorrichtung 34 abgelegt.

Die Partikelabnahme sollte im praktischen Betrieb möglichst dem idealisierten Standardverlauf entsprechen, allerdings wird innerhalb bestimmter Grenzen eine geringere Abnahme der Partikelkonzentration zugelassen. Hierfür wird eine Vergleichskurve Pᵥ gebildet, in dem der Zeitmassstab gegenüber der Standardkurve Pₛ um einen bestimmten Faktor gestreckt wird. Im dargestellten Beispiel beträgt dieser Streckungsfaktor 2. Die Vergleichskurve Pᵥ wird ebenfalls im Kennfeldspeicher 52 abgelegt.

In Schritt 118 wird die in der Kabine 10 herrschende Partikelkonzentration P mit einer Verzögerungszeit von beispielsweise einer Minute zweimal gemessen. Aus den beiden Messwerten wird die Steigung der zeitlichen Konzentrationsabnahme berechnet. Diese Steigung wird mit der Steigung der Vergleichskurve Pᵥ verglichen, die an der Stelle des Mittelwertes Pₘ der beiden gemessenen Konzentrationen vorliegt ist.

In Fig. 3 sind zwei gemessene Steigungen S₁ und S₂ mit den zugehörigen Messpunkten a, b bzw. c, d und deren Mittelwerten Pₘ₁ und Pₘ₂ dargestellt. Es zeigt sich, dass die Steigung S₁ für die beiden Messpunkte a und b flacher verläuft als die Steigung der Vergleichskurve Pᵥ im Punkt der zugehörigen mittleren Konzentration Pₘ₁. Dies bedeutet, dass die Konzentrationsabnahme zu gering ist, was auf eine Störung schließen lässt. Der Algorithmus löst daher eine Warnung aus. Die Steigung S₂ für die beiden Messpunkte c und d verläuft hingegen steiler als die Steigung der Vergleichskurve Pᵥ im Punkt der zugehörigen mittleren Konzentration Pₘ₂. Die Konzentrationsabnahme liegt damit im zulässigen Bereich, so dass keine Warnung erfolgt, sondern der Betrieb fortgesetzt werden kann.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So wurde die Erfindung vorstehend zwar anhand einer Fahrzeugkabine beschrieben, es versteht sich jedoch, dass die Erfindung auch bei anderen geschlossenen Räumen anwendbar ist. An Stelle des beschriebenen kombinierten Frischluft- und Umluftkreises mit lediglich einem Gebläse können auch getrennte Luftkreise mit jeweils zugehörigen Gebläsen vorgesehen sein.

## Patentansprüche

1. Vorrichtung zur Überwachung des Verunreinigungsgrades der Luft in einem geschlossenen Raum, insbesondere in einer Fahrzeugkabine (10), mit wenigstens einem Gebläse (14), welches durch wenigstens ein Filterelement (18, 24) strömende Luft in den geschlossenen Raum (10) fördert und mit wenigstens einem Innenraumsensor (46), der den Verunreinigungsgrad der Luft erfasst und der mit einer Steuervorrichtung (34) verbunden ist, **dadurch gekennzeichnet, dass** in einem Speicher (52) der Steuervorrichtung (34) wenigstens ein Kennfeld (Pᵥ) für eine vorgebbare zeitliche Abnahme des Verunreinigungsgrades abgelegt ist und dass die Steuervorrichtung (34) Mittel enthält, welche den Verunreinigungsgrad erfassen und mit den zeitlich zugeordneten Werten des Kennfeldes (Pᵥ) vergleichen und welche bei Abweichungen vom Kennfeld (Pᵥ) Warnsignale ausgibt.

2. Überwachungsvorrichtung nach Anspruch 1, **dadurch gekennzeichnet, dass** der Innenraumsensor (46) ein Partikelsensor oder Partikelzähler ist.

3. Überwachungsvorrichtung nach Anspruch 1 oder 2, **dadurch gekennzeichnet, dass** der Innenraumsensor (46) auf gesundheitsgefährdende und/oder toxische Partikel anspricht.

4. Überwachungsvorrichtung nach einem der vorhergehenden Ansprüche, **dadurch gekennzeichnet, dass** der Innenraumsensor (46) Partikel erfasst, deren Partikelgröße bis herab zu einer Partikelgröße von der Größenordnung 0,3 bis 3 µm beträgt.

5. Überwachungsvorrichtung nach einem der vorhergehenden Ansprüche, **dadurch gekennzeichnet, dass** das wenigstens eine Gebläse (14) der Förderung der Raumluft durch einen Umluftkreislauf dient, der wenigstens ein Umluftfilterelement (24) enthält.

6. Überwachungsvorrichtung nach einem der vorhergehenden Ansprüche, **dadurch gekennzeichnet, dass** das wenigstens eine Gebläse (14) der Förderung von Frischluft dient und die Frischluft durch wenigstens ein Frischluftfilterelement (18) in den geschlossenen Raum fördert.

7. Überwachungsvorrichtung nach einem der vorhergehenden Ansprüche, **dadurch gekennzeichnet, dass** das Umluftfilterelement (24) und/oder das Frischluftfilterelement (18) ein Aktivkohlefilter enthält.

8. Überwachungsvorrichtung nach einem der vorhergehenden Ansprüche, **dadurch gekennzeichnet, dass** durch das Gebläse (14) im geschlossenen Raum (10) ein Überdruck gegenüber der Umgebung ausgebildet wird.

9. Überwachungsvorrichtung nach einem der vorhergehenden Ansprüche, **dadurch gekennzeichnet, dass** in dem geschlossenen Raum (10) ein Drucksensor (44) angeordnet ist.

10. Überwachungsvorrichtung nach einem der vorhergehenden Ansprüche, **dadurch gekennzeichnet, dass** das Umluftfilterelement (24) und/oder das Frischluftfilterelement (18) ein Kodierelement (26, 28) aufweist, welches eine Identifizierung des Filterelements (18, 24) erlaubt, und dass eine Erkennungseinrichtung (36) zur Erkennung der Kodierung vorgesehen ist.

11. Überwachungsvorrichtung nach Anspruch 10, **dadurch gekennzeichnet, dass** ein Betriebsstundenzähler (38) vorgesehen ist, und dass die Steuervorrichtung (34) die Betriebsstunden für jedes verwendetes Filterelement (18, 24) gesondert erfasst.

## Claims

1. Device for monitoring the degree of pollution of the air in a closed room, in particular in a vehicle cab (10), with at least one blower (14) which conveys air flowing through at least one filter element (18, 24) into the closed room (10), and with at least one interior sensor (46) which detects the degree of pollution of the air and which is connected to a control device (34), **characterized in that** at least one characteristic map (P_{V}) for a stipulatable decrease in time of the degree of pollution is stored in a memory (52) of the control device (34), and **in that** the control device (34) contains means which detect the degree of pollution and compare it with the time-assigned values for the characteristic map (P_{V}) and which emit warning signals in the event of deviations from the characteristic map (P_{V}).

2. Monitoring device according to Claim 1, **characterized in that** the interior sensor (46) is a particle sensor or particle meter.

3. Monitoring device according to Claim 1 or 2, **characterized in that** the interior sensor (46) responds to health-injurious and/or toxic particles.

4. Monitoring device according to one of the preceding claims, **characterized in that** the interior sensor (46) detects particles, the particle size of which goes down to a particle size of the order of 0.3 to 3 µm.

5. Monitoring device according to one of the preceding claims, **characterized in that** the at least one blower (14) serves for conveying the room air through a circulating-air circuit which contains at least one circulating-air filter element (24).

6. Monitoring device according to one of the preceding claims, **characterized in that** the at least one blower (14) serves for conveying fresh air and conveys the fresh air through at least one fresh-air filter element (18) into the closed room.

7. Monitoring device according to one of the preceding claims, **characterized in that** the circulating-air filter element (24) and/or the fresh-air filter element (18) contain/contains an activated-charcoal filter.

8. Monitoring device according to one of the preceding claims, **characterized in that** an overpressure is generated in the closed room (10) with respect to the surroundings by means of the blower (14).

9. Monitoring device according to one of the preceding claims, **characterized in that** a pressure sensor (44) is arranged in the closed room (10).

10. Monitoring device according to one of the preceding claims, **characterized in that** the circulating-air filter element (24) and/or the fresh-air filter element (18) have/has a coding element (26, 28) which allows an identification of the filter element (18, 24), and **in that** a recognition device (36) for recognizing the coding is provided.

11. Monitoring device according to Claim 10, **characterized in that** an elapsed-time meter (38) is provided, and **in that** the control device (34) detects separately the elapsed time for each filter element (18, 24) used.

## Revendications

1. Dispositif de surveillance du degré de pollution de l'air dans un local fermé, en particulier dans une cabine d'un véhicule (10), comprenant au moins une soufflante (14) qui refoule de l'air s'écoulant à travers au moins un élément de filtrage (18, 24) dans le local fermé (10) et au moins un capteur pour locaux internes (46), qui détecte le degré de pollution de l' air et qui est connecté à un dispositif de commande (34), **caractérisé en ce que** dans une mémoire (52) du dispositif de commande (34), est saisi au moins un champ caractéristique (P_{V}) pour une diminution temporelle prédéfinie du degré de pollution, et **en ce que** le dispositif de commande (34) contient des moyens qui détectent le degré de pollution et qui le comparent avec les valeurs du champ caractéristique (Pᵥ) associées dans le temps, et qui fournissent des signaux d'alarme en cas d'écart par rapport au champ caractéristique (Pᵥ).

2. Dispositif de surveillance selon la revendication 1, **caractérisé en ce que** le capteur pour locaux internes (46) est un capteur de particules ou un compteur de particules.

3. Dispositif de surveillance selon la revendication 1 ou 2, **caractérisé en ce que** le capteur pour locaux internes (46) réagit à des particules néfastes à la santé et/ou toxiques.

4. Dispositif de surveillance selon l'une quelconque des revendications précédentes, **caractérisé en ce que** le capteur pour locaux internes (46) détecte des particules dont la taille de particule descend jusqu'à une taille de particule de l'ordre de 0,3 à 3 µm.

5. Dispositif de surveillance selon l'une quelconque des revendications précédentes, **caractérisé en ce que** l'au moins une soufflante (14) sert à refouler l'air du local à travers un circuit de recirculation d'air, qui contient au moins un élément de filtrage de l'air recirculé (24).

6. Dispositif de surveillance selon l'une quelconque des revendications précédentes, **caractérisé en ce que** l'au moins une soufflante (14) sert à refouler l'air frais et refoule l'air frais par au moins un élément de filtrage d'air frais (18) dans le local fermé.

7. Dispositif de surveillance selon l'une quelconque des revendications précédentes, **caractérisé en ce que** l'élément de filtrage de l'air recirculé (24) et/ou l'élément de filtrage d'air frais (18) contiennent un filtre à charbon actif.

8. Dispositif de surveillance selon l'une quelconque des revendications précédentes, **caractérisé en ce qu'**une surpression par rapport à l'environnement est produite par la soufflante (14) dans le local fermé (10).

9. Dispositif de surveillance selon l'une quelconque des revendications précédentes, **caractérisé en ce qu'**un capteur de pression (44) est disposé dans le local fermé (10).

10. Dispositif de surveillance selon l'une quelconque des revendications précédentes, **caractérisé en ce que** l'élément de filtrage de l'air recirculé (24) et/ou l'élément de filtrage d'air frais (18) présentent un élément de codage (26, 28) qui permet d'identifier l'élément de filtrage (18, 24) et **en ce qu'**un dispositif de reconnaissance (36) est prévu pour reconnaître le codage.

11. Dispositif de surveillance selon la revendication 10, **caractérisé en ce qu'**un compteur d'heures de fonctionnement (38) est prévu, et **en ce que** le dispositif de commande (34) détecte séparément les heures de fonctionnement pour chaque élément de filtrage utilisé (18, 24).
